Europäisches Patentamt

European Patent Office

Office européen des brevets

(11) Publication number: **0 100 030**
**B1**

(12) EUROPEAN PATENT SPECIFICATION

(45) Date of publication of patent specification: **07.11.90**

(21) Application number: **83106898.6**

(22) Date of filing: **14.07.83**

(51) Int. Cl.⁵: **A 47 J 31/40**

(54) Method and coffee making machine for alternatively dispensing one or more charges of a coffee infusion.

(30) Priority: **26.07.82 IT 2256882**

(43) Date of publication of application:
**08.02.84 Bulletin 84/06**

(45) Publication of the grant of the patent:
**07.11.90 Bulletin 90/45**

(84) Designated Contracting States:
**AT CH DE FR LI**

(56) References cited:
**FR-A-2 226 137**
**FR-A-2 301 214**
**FR-A-2 477 001**
**GB-A- 937 252**
**GB-A- 971 767**
**US-A-2 852 203**

(73) Proprietor: **CIMBALI S.p.A.**
**Via Manzoni, 17**
**I-20082 Binasco (MI) (IT)**

(72) Inventor: **Locati, Santino**
**Via Bari, 24/E**
**I-20136 Milano (IT)**

(74) Representative: **Josif, Albert et al**
**MODIANO & ASSOCIATI srl Via Meravigli, 16**
**I-20123 Milan (IT)**

## Description

This invention relates to a method for dispensing one or more, in particular two charges of a coffee infusion from automatic coffee-making machines, and automatic coffee-making machine for implementing the method according to the preamble of claim 1 and claim 3 respectively. Such a method and such an automatic coffee making machine are known.

As is known, currently available commercially are automatic coffee-making machines which, upon actuation of a suitable control, sequentially provide for automatically grinding a metered amount of coffee, introducing the metered out powder coffee into a filter member, whence the spent coffee powder amount is automatically ejected, and subsequently delivering to said coffee filter member a proportioned amount of water.

Such machines have attempted to solve the problem to dispense with the same filter member selectively either one or two coffee charges.

It will be appreciated that the dispensing time is proportioned to the contact time between the coffee powder and hot water flowing therethrough and is therefore one among the important parameters of the infusion process in an automatic coffee-making machine. It is therefore required that the same optimum dispensing time occurs both for a single and a double coffee charge, in order to obtain an optimum coffee infusion.

Further important parameters besides the coffee quality, humidity rate and the like are the water to coffee ratio, the temperature of hot water, the compression of the coffee powder cake and the grain size of the coffee powder. In automatic coffee making machines, these parameters are given optimum values. The configuration of the pot of the filter member is so designed, that with a given compression of the coffee powder cake and the grain size of the coffee powder the hydraulic resistance met by the hot water while flowing through the compressed coffee powder cake contained in the filter pot determines the dispensing time.

Apparently the most obvious and straightforward solution of the double charge problem would be that of providing, for dispensing two coffee charges, an arrangement effective to correspondingly double the single coffee charge amount of powder coffee and that of water being supplied, but this is normally not practicable because in doubling the amount of powder coffee loaded in a filter member having a pot configuration and water passage grid set up for a single coffee charge, there would occur an excessively high hydraulic resistance which would hinder the flow of water through the powder coffee, with attendant considerable extension of the dispensing time, and above all, significant alteration of the product quality.

The same would apply in case where the filter pot member were designed for a two coffee charge dispensing operation, since when dispensing a single coffee charge, excessively low hydraulic resistance would be encountered, thereby dispensing i.e. the infusion process would be completed within a very short time and would result in a coffee infusion of inferior quality, owing to the water being not enabled to fully utilize the coffee powder in flowing therethrough.

For the reasons outlined above, automatic coffee making machines set up to automatically dispense one or two charges, adopt in practice some compromized solutions based on the principle of using, for dispensing two charges, an amount of coffee which is less than twice the amount used for a single coffee charge, and a water passage grid in the filter member which is adapted to create a hydraulic resistance about half way between that utilized in the single charge dispensing mode and that utilized in the two charges dispensing mode.

Thus, in actual practice, such prior machines cannot afford optimum operation in any of their operating conditions, owing to their design originating indeed from a compromise. Further, there occur significant quality differences between a coffee infusion produced in the single charge mode and that produced in the two-charge mode.

Other available approaches provide for dispensing automatically two coffee charges, for an exact repetition of the dispensing cycle of a single charge, in automatic sequential order, which results in a good quality product but has the disadvantage of making the production times excessively long, because in practice the machine, after producing the first coffee charge, is required to eject the spent residue, grind more coffee afresh, and complete dispensing of the successive coffee infusion.

Since the hydraulic resistance is affected also by the grain size of the coffee powder, attempts have been already made to adjust the effective coffee dispensing time for a single coffee dose to the optimum dispensing time for such a single dose by the selection of the appropriate grain size of the coffee powder. This technique has been adopted in DE—A1—3 107 549, where an automatic machine is described for producing single coffee charges sequentially, which includes means for controlling the grain size of powder coffee. When the dispensing time for one coffee charge varies from a reference time, means are operative to accordingly change the grain size setting for the powder coffee grinding, thereby dispensing of the next charge of coffee infusion takes place within a time period regarded as an optimum period corresponding to the set time.

That machine fails to solve the problem connected with the constancy of the dispensing time for one or two charges, because it is solely designed and constructed to automatically dispense single charges.

Other approaches, such as that of replacing the filter member assembly as is common practice with traditional design machines, according to whether one or two charges are to be dispensed, are of no avail in this specific case, because they would imply in practice full duplication of the machine mechanisms, thus resulting in an unacceptable increase of the machine production costs.

Thus, the task of this invention is indeed that of removing such prior drawbacks by providing a method for dispensing one or more and in particular two charges of a coffee infusion in automatic coffee-making machines, which enables, for dispensing at least two coffee charges, the use of an amount of powder coffee which is a multiple of that used for dispensing a single charge, without this bringing about such an increased hydraulic resistance as to significantly alter the dispensing times and affect the quality of the dispensed infusion.

Within that task it is an object of the invention to provide a coffee-making machine which allows, without any modifications of the filter pot member assemblies and water delivery assemblies, the selective accomplishment of the dispensing of either one or more charges having both optimum characteristics.

A further object of this invention is to provide a method which enables a very fast switch over feature from the dispensing of a single charge to that of more charges, and/or vice versa, without involving any special difficulties for the operator's action.

Yet another object of this invention is to provide a method which, owing to its peculiar features, can give full assurance of being reliable, while always affording optimum quality of the resulting coffee infusion.

According to the invention, the above task and objects are achieved by a method as defined in claim 1 and an automatic coffee making machine for implementing this method as defined in claim 3 respectively. Particular embodiments of the invention are set out in dependent claims 2 and 4 to 5.

Further features and advantages will be more clearly understood from the following detailed description of a method for dispensing one or two charges of a coffee infusion and an automatic coffee-making machine for implementing this method, as illustrated by way of example and not of limitation in the accompanying drawings, where:

Figure 1 shows schematically the metering assembly and filter pot and filter holder assembly of an automatic coffee-making machine, of a general type otherwise known per se, as set up to dispense a single coffee charge;

Figure 2 shows the same assembly as in Figure 1, but as set up to dispense two coffee charges; and

Figure 3 schematically illustrates the means for changing the coffee grinding fineness.

Making reference to the drawing figures, this method for dispensing one or two coffee infusion charges from automatic coffee-making machines comprises the steps of grinding, through a coffee grinder 20 incorporated in the machine, an amount of coffee which is automatically metered, as usual, by suitably timing the period of time during which the coffee grinder is kept in operation. The ground coffee powder is introduced, via a hopper generally indicated at 1, into a collector or pot 2 which, in a manner known per se, is effective to bring the metered out amount of powder coffee into a filter holder 3, above which is provided a water delivering presser, generally designated with the reference numeral 4.

The filter holder 3 has on its bottom a header 3a provided with two spouts 3b and 3c from both of which the coffee infusion is dispensed into the cup "C", when the machine is set for a single coffee dose charge operation. When a double charge is to be dispensed under each of the spouts 3b and 3c one respective cup is placed and filled with coffee infusion.

In accordance with an operating cycle which is typical of such machines, the metered out amount of coffee is compressed by the presser 4 into the filter pot member 2 when it is placed above the filter holder 3, thereafter, from the presser 4, a metered amount of hot water is delivered into the filter pot 2, which will produce a desired amount of coffee infusion.

A peculiar feature of the invention is that where two such amounts of coffee infusion are to be dispensed simultaneously, the grinding fineness of the coffee is changed, as will be explained hereinafter, with respect to the fineness used when a single charge is to be dispensed; more specifically, for switching from the one charge mode over to the two charge mode, the powder coffee for two-charge dispensing is ground to a larger grain size, thereby, while still using twice the amount of powder coffee with respect to single charge dispensing, the hydraulic resistance opposed by the powder coffee cake 2a, 2b has such a value as to keep the preparation times for the single and double charges substantially equal, without requiring modification of either the filter pot grid or its dimensions.

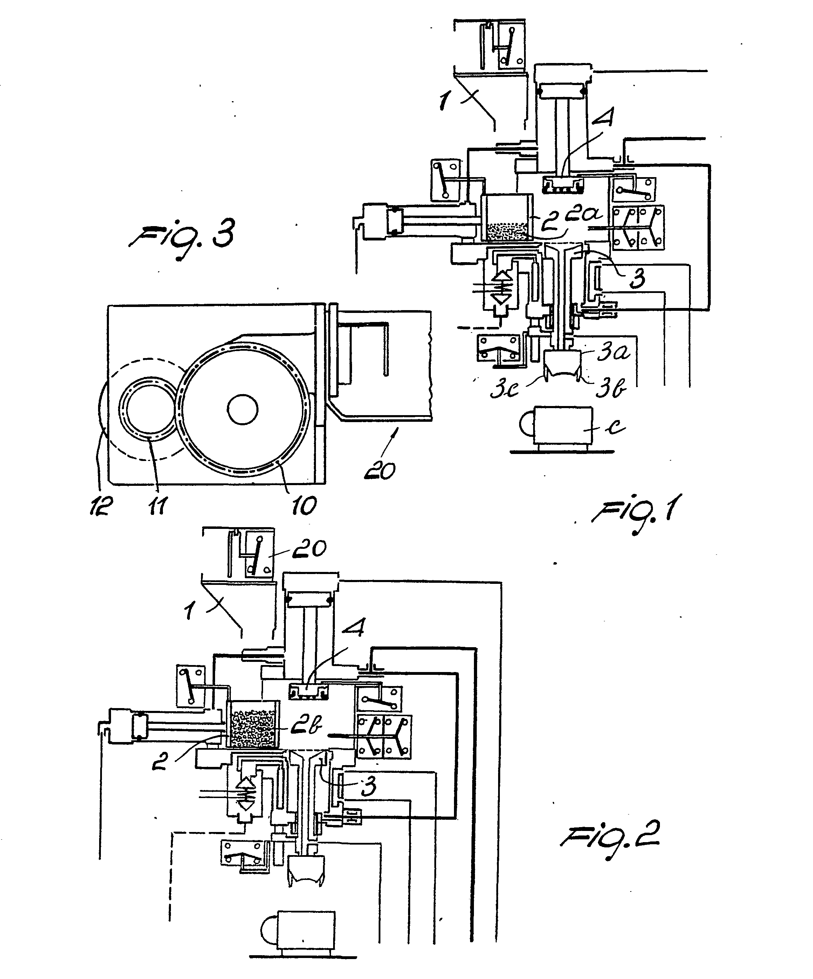

Grinding fineness is changed by setting a constant ratio of the grain size used for one charge dispensing to the grain size used for two charges dispensing. This enables the operator to change, according to necessity, the grinding fineness of the coffee powder for a single charge, and automatically obtain a corresponding change in the grinding fineness for two-charge dispensing, thereby the preparation or dispensing time for one or two charges remains practically the same, i.e. equal to the optimum dispensing time as above explained. Fig. 1 shows the coffee powder cake 2a for a single dose coffee charge, i.e. for a single coffee cup "C". Whereas Fig. 2 shows a coffee cake 2b for a double dose coffee charge, i.e. destined for two coffee cups "C". It will be appreciated that the filter pot 2 is the same for both operations, but the coffee cake 2b has a greater height than the cake 2a.

The required grain size for a single coffee dose charge and the grain size for double coffee dose charge, by which equal optimum dispensing times are obtained, are determined experimentally by try-and-check tests and the grinding mechanism is accordingly adjusted.

According to a preferred embodiment, to accomplish the grinding fineness change, the grinding fineness control device, which is applicable to any type of manually adjustable grinders, e.g. the one disclosed in US—A—2852203, has gear teeth formed peripherally, as indicated at 10 in Figure 3, which selectively cooperates with the grinding fineness adjusting shaft and which is in mesh with a small pinion gear 11 driven by a gear motor 12 having a motor shaft which, in addition to driving the pinion gear, effects in consequence, i.e. selectively, the grinding fineness adjusting rotation of the control device adjusting shaft, thus changing the grinding size setting of the grinder.

With this arrangement, the operator has simply to switch the grinder to the selected operation mode i.e. perform the adjusting of the control device rotation to change the grinding grade of the grinder, being at all times assured that the set grinding fineness ratio will bring about a constant ratio between the grinding fineness set for one charge and the grinding fineness utilized for dispensing a double charge.

**Claims**

1. A method for dispensing alternatively one, two or more metered charges of coffee infusion at a time from at least one coffee dispensing unit of an automatic coffee making machine having a coffee powder filter pot mechanism (2, 3) suitable for at least a single coffee charge dispension and provided with a presser and hot water dose supplier (4) cooperating with the filter pot member (2) and with a controllable grinding mechanism (20) for grinding roasted coffee beans into coffee powder of selectively variable grain size, wherein the roasted coffee beans are first ground to a coffee powder having a selected grain size, a metered quantity of so ground coffee powder is introduced into the filter pot member (2, 3) and compressed therein to a selected compression degree and a metered quantity of hot water is supplied thereto and cause to flow through the coffee powder contained in the filter pot member (2, 3), while the coffee infusion obtained is dispensed therefrom for a selected optimum duration time, characterized in that upon selection of the coffee dose charge to be dispensed the mechanism (20) for grinding roasted coffee beans is first adjusted to grind the roasted coffee beans to a coffee powder with a grain size preestablished experimentally to provide, with the compression degree imparted by the presser (4) to the coffee powder contained in the filter pot member (2, 3) and with the configuration of the filter pot member (2) adopted in the machine, a hydraulic resistance by which the dispensing time corresponds to said optimum dispensing time, the thus adjusted grinding mechanism (20) is operated to deliver the selected coffee dose charge of coffee powder and supply it to the filter pot member (2, 3) and the presser and hot water supply mechanism (4) is operated to compress to an adopted compression degree the coffee powder dose (2a, 2b) contained in the filter pot mechanism (2, 3), and to supply thereto the metered hot water quantity corresponding to the selected coffee dose charge thereby allowing the coffee infusion to be dispensed during said optimum dispensing time, and wherein the amount of coffee powder and the grain size of said coffee powder are increased in proportion with the number of charges of coffee infusion to be delivered in such a way that the optimum dispensing time is kept constant.

2. A method according to Claim 1, characterized in that when the maximum number of coffee dose charges is two the grinding fineness is changed by setting a constant grinding size ratio between the grain size used in said single charge dispensing mode and the grain size used in said two charge dispensing mode, and/or vice versa.

3. An automatic coffee making machine for implementing the method according to the preceding claims, comprising in combination a filter pot mechanism (2, 3) suitable for at least a single coffee charge dispension including a filter pot member (2), a filter holder (3), a presser and hot water dose supplier (4) cooperating with the filter pot member (2), a controllable grinding mechanism (20) with a grinding control device (10, 12), and coffee infusion dispension means (3a) characterized in that it comprises a hopper (1) for introducing the ground coffee powder dose (2a, 2b) into the filter pot member (2), means being provided so that upon selection of the number of coffee charges to be dispensed the grinding mechanism is adjusted to grind the roasted coffee beans to a coffee powder with a grain size preestablished experimentally to provide, with the compression degree imparted by the presser (4) to the coffee powder contained in the filter pot member (2, 3) and with the configuration of the filter pot member (2) adapted in the machine, an hydraulic resistance by which the dispensing time corresponds to said optimum dispensing time, said means further ensuring that the amount of coffee powder and the grain size of the said coffee powder are increased in proportion with the number of charges of coffee infusion to be delivered in such a way that the optimum dispensing time is kept constant.

4. A machine according to claim 3, wherein said controllable grinding mechanism (20) comprises a tooth formation (10) meshing with a small pinion gear (11) driven by a gear motor (12) to thereby change the position of said device and consequently the resulting grain size.

5. A machine according to claim 3, characterized in that said coffee infusion dispensing means (3a) comprise a header (3a) and at least one spout (3b, 3c).

**Patentansprüche**

1. Verfahren zur wahlweisen Ausgabe von einer, zwei oder mehr dosierten Kaffeeaufgußportionen zur gleichen Zeit aus mindestens einer Kaffeeausgabeeinheit einer automatischen Kaffeemaschine, die einen Kaffeepulverfiltertopfmechanismus (2, 3) besitzt, der zur Ausgabe mindestens einer einzigen Kaffeeportion geeignet und mit einer Preß- und Heißwasserzuführeinrichtung (4) versehen ist, die mit dem Filtertopf (2) zusammenwirkt, ferner eine steuerbare Mühle (20) zum Mahlen von gerösteten Kaffeebohnen zu einem Kaffeepulver von wahlweise veränderbarer Korngröße, wobei die gerösteten Kaffeebohnen zunächst zu einem Kaffeepulver von gewählter Korngröße gemahlen werden, eine dosierte Menge des so erhaltenen, gemahlenen Kaffeepulvers in den Filtertopf (2, 3) eingebracht und in diesem auf einen gewählten Verdichtungsgrad gepreßt wird, heißes Wasser in einer dosierten Menge zugeführt und veranlaßt wird, durch das in dem Filtertopf (2, 3) enthaltene Kaffeepulver zu fließen, während der erhaltene Kaffeeaufguß von dort während einer gewählten, optimalen Zeit ausgegeben wird, dadurch gekennzeichnet, daß nach der Wahl der auszugebenden Kaffeemenge der Mechanismus (20) zum Mahlen von gerösteten Kaffeebohnen zuerst so eingestellt wird, daß er die gerösteten Kaffeebohnen zu einem Kaffeepulver mit einer solchen, vorher experimentell bestimmten Konrgröße mahlt, daß bei einer mittels der Preßeinrichtung (4) bewirkten Verdichtung des in dem Filtertopf (2, 3) enthaltenen Kaffeepulvers auf einen bestimmten Verdichtungsgrad und angesichts der Ausbildung des in der Maschine verwendeten Filtertopfes (2) ein solcher hydraulischer Strömungswiderstand erzielt wird, daß die Ausgabezeit der genannten optimalen Ausgabezeit entspricht, worauf der so eingestellte Mahlmechanismus (20) derart betrieben wird, daß er das Kaffeepulver in der vorgewählten Menge erzeugt und dem Filtertopf (2, 3) zuführt, der Preß- und Heißwasserzuführmechanismus (4) derart betätigt wird, daß er die in dem Filtertopfmechanismus (2, 3) enthaltene Kaffeepulvermenge (2a, 2b) auf einen gewählten Verdichtungsgrad verdichtet und ihm heißes Wasser in einer dosierten Menge zuführt, die der gewählten Kaffeemenge entspricht, so daß der Kaffeeaufguß in der optimalen Ausgabezeit ausgegeben werden kann, und daß die Menge des Kaffeepulvers und die Korngröße des Kaffeepulvers proportional der Anzahl der auszugebenden Kaffeeaufgußportionen derart vergrößert werden, daß die optimale Ausgabezeit konstantgehalten wird.

2. Verfahren nach Anspruch 1, dadurch gekennzeichnet, daß bei maximal zwei auszugebenden Kaffeeportionen für das Verändern der Mahlfeinheit zwischen der für die Ausgabe einer einzigen Portion anzuwendenden Mahlfeinheit und der für die Ausgabe von zwei Portionen anzuwendenden Mahlfeinheit oder umgekehrt ein konstantes Mahlfeinheitsverhältnis vorgegeben wird.

3. Automatische Kaffeemaschine zum Durchführen des Verfahrens nach den vorhergehenden Ansprüchen, die in Kombination einen Filtertopfmechanismus (2, 3) für die Ausgabe mindestens aufweist, der zur Ausgabe mindestens einer einzigen Kaffeeportion geeignet ist und einen Filtertopf (2), einen Filterhalter (3) und eine Preß- und Heißwasserzuführvorrichtung (4) aufweist, die mit dem Filtertopf (2) zusammenwirkt, wobei die Maschine ferner einen steuerbaren Mahlmechanismus (20) mit einer Mahlsteuereinrichtung (10, 12) und eine Einrichtung (3a) zur Ausgabe des Kaffeeaufgusses aufweist, dadurch gekennzeichnet, daß sie einen Trichter (1) zum Einbringen des gemahlenen Kaffeepulvers (2a, 2b) in den Filtertopf (2) besitzt, daß eine Einrichtung vorgesehen ist, die bewirkt, daß auf Grund der Auswahl der Anzahl der auszugebenden Kaffeeportionen der Mahlmechanismus so eingestellt wird, daß er die gerösteten Kaffeebohnen zu einem Kaffeepulver mit einer solchen, vorher experimentell bestimmten Konrgröße mahlt, daß bei einer mittels der Preßeinrichtung (4) bewirkten Verdichtung des in dem Filtertopf (2, 3) enthaltenen Kaffeepulvers auf einen bestimmten Verdichtungsgrad und angesichts der Ausbildung des in der Maschine verwendeten Filtertopfes (2) ein solcher hydraulischer Strömungswiderstand erzielt wird, daß die Ausgabezeit der genannten optimalen Ausgabezeit entspricht, wobei die genannte Einrichtung ferner gewährleistet, daß die Menge des Kaffeepulvers und die Korngröße des Kaffeepulvers proportional der Anzahl der auszugebenden Kaffeeaufgußportionen derart vergrößert werden, daß die optimale Ausgabezeit konstantgehalten wird.

4. Maschine nach Anspruch 3, in der der steuerbare Mahlmechanismus (20) eine Verzahnung (10) besitzt, die mit einem von einem Getriebemotor (12) angetriebenen, kleinen Ritzel (11) derart kämmt, daß die Stellung der genannten Vorrichtung und damit die erhaltene Mahlfeinheit verändert wird.

5. Maschine nach Anspruch 3, dadurch gekennzeichnet, daß die Einrichtung (3a) zur Ausgabe des Kaffeeaufgusses einen Sammelbehälter (3a) und mindestens einen Ausflußstutzen (3b, 3c) aufweist.

**Revendications**

1. Procédé pour distribuer alternativement une, deux ou plusieurs quantités dosées d'infusion de café à partir d'au moins une unité distributrice d'un percolateur automatique de café possédant un mécanisme à pot filtrant de poudre de café (2, 3) convenant pour la distribution d'au moins une seule dose de café et comportant un organe tasseur et d'alimentation (4) en dose d'eau chaude qui coopère avec l'élément de pot filtrant (2) et avec un mécanisme de mouture (20) commandable pour moudre des grains de café torréfié en poudre de café de granulométrie sélectivement variable, dans lequel les grains de café torréfié sont d'abord moulus en une poudre de café ayant une granulométrie sélectionnée, une quantité dosée de cette poudre de café ainsi moulue est introduite dans l'élément (2, 3) de pot filtrant où elle est comprimée jusqu'à un certain degré de compression et où on injecte une quantité dosée d'eau chaude qu'on amène à couler à travers la poudre de café contenue dans l'élément (2, 3) de pot filtrant, l'infusion de café obtenue en est livrée pendant une durée optimale sélectionnée, caractérisé en ce que lors de la sélection de la quantité dosée de café devant être distribuée le mécanisme (20) de mouture des grains de café torréfié est d'abord réglé pour moudre les grains de café torréfié en une poudre de café ayant une granulométrie préétablie expérimentalement pour fournir, en combinaison avec le degré de compression exercé par l'organe tasseur (4) sur la poudre de café contenue dans l'élément de pot filtrant (2, 3) et avec la configuration d'élément de pot filtrant (2) adoptée dans le percolateur une résistance hydraulique telle que le temps de distribution correspond audit temps de distribution optimal, le mécanisme de mouture (20) ainsi réglé est mis en fonctionnement pour distribuer la quantité dosée sélectionnée de poudre de café et à en alimenter l'élément (2, 3) de pot filtrant, et le mécanisme à organe tasseur (4) et d'alimentation d'eau chaude est mis en fonctionnement pour comprimer jusqu'à un degré de compression adopté la dose de poudre de café (2a, 2b) contenue dans le mécanisme de pot filtrant (2, 3) et y injecter la quantité dosée d'eau chaude correspondant à la quantité dosée de café sélectionnée permettant ainsi la distribution de l'infusion de café pendant ladite durée optimale de distribution, et selon lequel la quantité de poudre de café et la granulométrie de ladite poudre de café sont augmentées en proportion avec le nombre de charges d'infusion de café devant être débitées, de telle sorte que le temps de distribution optimal est maintenu constant.

2. Procédé selon la revendication 1, caractérisé en ce que lorsque le nombre maximum de charges de doses de café est de deux, la finesse de la mouture est modifiée en fixant un rapport de mouture constant entre la granulométrie adoptée dans ce mode de distribution à charge unique et la granulométrie adoptée dans ledit mode de distribution à deux charges et/ou vice-versa.

3. Percolateur automatique de café pour mettre en oeuvre le procédé selon les revendications précédentes, comportant en combinaison un mécanisme de pot filtrant (2, 3) convenant pour la distribution d'au moins une charge unique de café, comportant un élément de pot filtrant (2), un porte-filtre (3), un organe tasseur et d'alimentation (4) en doses d'eau chaude qui coopère avec l'élément de pot filtrant (2), un mécanisme de mouture (20) commandable possédant un dispositif de commande de mouture (10, 12), caractérisé en ce qu'il comporte une trémie (1) pour introduire la dose de poudre de café moulu (2a, 2b) dans l'élément de pot filtrant (2) et un moyen de distribution de l'infusion de café (3a), des moyens étant prévus pour que lors de la sélection du nombre de charges de café devant être distribués le mécanisme de mouture est réglé pour moudre les grains de café torréfié en poudre de café ayant une granulométrie pré-établie expérimentalement pour fournir en combinaison avec le degré de compression exercé par l'organe tasseur (4) sur la poudre de café contenue dans l'élément de pot filtrant (2, 3) et avec la configuration de l'élément de pot filtrant (2) adoptée dans le percolateur, une résistance hydraulique telle que le temps de distribution correspond audit temps de distribution optimal, lesdits moyens permettant en outre de s'assurer que la quantité de poudre de café et la granulométrie de ladite poudre de café sont augmentées en proportion avec le nombre de charges d'infusion de café devant être débitées de telle sorte que le temps de distribution optimal est maintenu constant.

4. Percolateur selon la revendication 3, dans lequel ledit mécanisme (20) de mouture commandable comporte un élément denté (10) en prise avec un petit pignon (11) entraîné par un moteur (12) lui permettant de modifier la position dudit dispositif et par conséquent la granulométrie en résultant.

5. Percolateur selon la revendication 3, caractérisé en ce que lesdits moyens (3) de distribution d'infusion de café comportent un distributeur (3a) et au moins un bec verseur (3b, 3c).

Fig.3

Fig.1

Fig.2